(19) Europäisches Patentamt

European Patent Office

Office européen des brevets

(11) **EP 0 534 069 B1**

(12) **EUROPÄISCHE PATENTSCHRIFT**

(45) Veröffentlichungstag und Bekanntmachung des
Hinweises auf die Patenterteilung:
**06.11.1996  Patentblatt 1996/45**

(51) Int Cl.6: **G01S 13/32**, G01S 13/536,
G01S 13/28

(21) Anmeldenummer: **92111101.9**

(22) Anmeldetag: **01.07.1992**

(54) **Verfahren zur Signalverarbeitung für eine Radaranlage**

Method for radar signal processing

Procédé de traitement de signaux dans un appareil radar

(84) Benannte Vertragsstaaten:
**DE FR GB SE**

(30) Priorität: **27.09.1991  DE 4132240**

(43) Veröffentlichungstag der Anmeldung:
**31.03.1993   Patentblatt 1993/13**

(73) Patentinhaber: **Daimler-Benz Aerospace
Aktiengesellschaft
81663 München (DE)**

(72) Erfinder:
• **Minker, Manfred, Dipl.-Ing.
W-7900 Ulm (DE)**

• **Plagge, Wilfried
W-3344 Ohrum (DE)**
• **Rohling, Hermann, Prof. Dr.
W-3340 Wolfenbüttel (DE)**

(74) Vertreter: **Schulze, Harald Rudolf, Dipl.-Ing. et al
Daimler-Benz Aerospace AG
Patentabteilung
Sedanstrasse 10
89077 Ulm (DE)**

(56) Entgegenhaltungen:
**US-A- 4 566 011           US-A- 4 578 677
US-A- 4 734 699**

**Beschreibung**

Die Erfindung betrifft ein Verfahren zur Signalverarbeitung für eine Radaranlage nach dem Oberbegriff des Patentanspruchs 1, das aus dem Dokument US-A-4 578 677 bekannt ist.

Bei Radaranlagen werden in zunehmendem Maße Haibleitersender und/oder aktive Array-Antennen eingesetzt. Insbesondere diese Bauelemente erfordern ein Verringern der bei Röhrengeräten üblichen hohen Spitzenleistung kurzer Sendeimpulse. Bei kleinerer Spitzenleistung ist ein sogenannter High-Duty-Cycle-Betrieb oder ein sogenannter CW-Betrieb mit Intrapulsmodulation und Anwendung eines Pulskonpressionsverfahrens zur Gewährleistung der Entfernungsneßmöglichkeit erforderlich. Bei derartigen Verfahren werden periodische Codes zur Codierung der ausgesandten Signale (Sendesignale) verwendet und die zugehörigen empfangenen Signale (Empfangssignale) mit Hilfe von Kreuzkorrelationsfunktionen ausgewertet.

Es hat sich nun herausgestellt, daß insbesondere bei der Auswertung eines oder mehrerer bewegter, tatsächlich vorhandener Ziele in nachteiliger Weise scheinbar vorhandene Ziele entstehen. Letztere sind störend und entstehen aufgrund des verwendeten Codes und/oder der verwendeten Korrelationsfunktion.

Der Erfindung liegt die Aufgabe zugrunde, ein gattungsgemäßes Verfahren anzugeben, das bei gleichzeitiger Zielentfernungs- und -radialgeschwindigkeitsmessung, insbesondere von Mehrzielsituationen, sowohl im Entfernungs- als auch im Geschwindigkeitsbereich einen jeweils großen Eindeutigkeitsbereich besitzt.

Diese Aufgabe wird gelöst durch die im kennzeichnenden Teil des Patentanspruchs 1 angegebenen Merkmale. Vorteilhafte Ausgestaltungen und/oder Weiterbildungen sind den Unteransprüchen entnehmbar.

Ein Vorteil der Erfindung besteht darin, daß in überraschender Weise der maximale Entfernungs-Eindeutigkeitsbereich $R_{max}$ und der maximale Dopplerfrequenz-Eindeutigkeitsbereich $f_{Dmax}$ in einem weiten Bereich unabhängig voneinander einstellbar sind und damit an die Verwendung der Radaranlage angepaßt werden können.

Die Erfindung beruht auf der Erkenntnis, daß durch Anwendung spezieller periodischer Codes und eines daran angepaßten Auswerteverfahrens eine Auswertefunktion entsteht, bei welcher in einer Einzelsituation lediglich ein Hauptmaximum mit zugehörigen Nebenmaxima entsteht, wobei letztere alle im wesentlichen die gleiche Höhe besitzen.

Die Erfindung wird im folgenden anhand von Ausführungsbeispielen unter Bezugnahme auf schematische Zeichnungen näher erläutert. Es zeigen

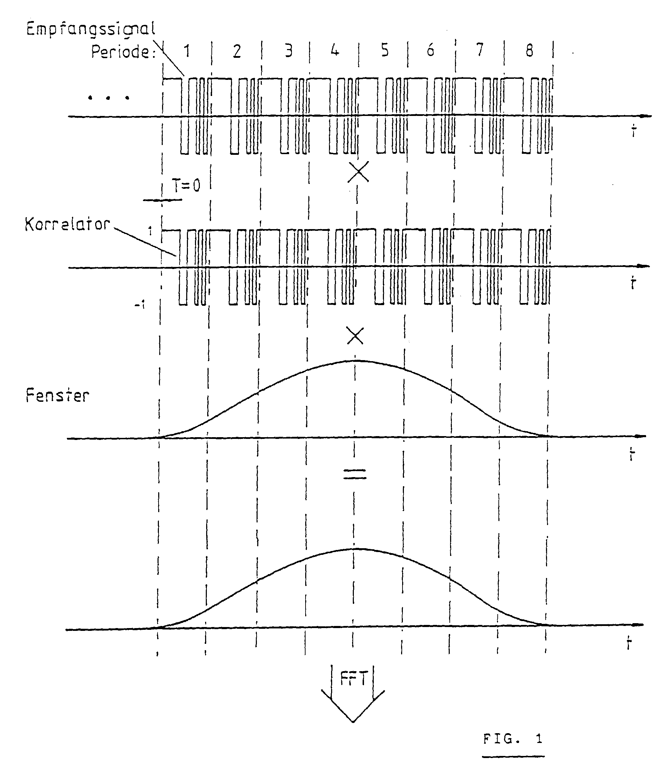

FIG. 1 bis FIG. 4 schematische dargestellte Diagramme zur Erläuterung der Erfindung.

Bei der Erfindung wird von der Antenne der Radaranlage ein Sendesignal ausgesandt, welches einen sich zeitlich periodisch wiederholenden Polyphasencode enthält, der nach der Formel

$$s_n = \exp(j \, \frac{\pi}{3 \cdot N} \, (n^3 - N^2 n))$$

$$n = 0 \ldots N - 1$$

$$N \geq 3; \; N = \text{Primzahl}$$

gebildet wird. Dabei ist N außerdem gleich der Anzahl der Subpulse in dem Polyphasencode. Außerdem ist N gleich der Anzahl der Entfernungstore in Entfernungsrichtung.

Die zeitliche Periodenlänge eines solchen Codes ist durch den Wert $N \cdot \tau$ bestimmt, wobei $\tau$ die Subpulslänge eines Subpulses bedeutet, d.h. der Code enthält N Subpulse. Mit derartigen Codes ist ein Entfernungs(Range)-Eindeutigkeitsbereich erreichbar, dessen maximaler Entfernungswert $R_{max}$ durch die Formel

$$R_{max} = N \cdot \tau \cdot c/2$$

bestimmt ist, wobei c die Lichtgeschwindigkeit in dem gewählten Ausbreitungsmedium, z.B. Luft, bedeutet. Der zugehörige maximale Dopplerfrequenzeindeutigkeitsbereich und damit der Geschwindigkeitseindeutigkeitsbereich des Zieles ist vorteilhafterweise unabhängig von der Codewortlänge und lediglich von der Subpulslänge $\tau$ abhängig gemäß der Formel

$$f_{Dmax} = 1/\tau,$$

wobei $f_{Dmax}$ die maximale Dopplerfrequenz bedeutet.

Derartige Codes haben die vorteilhafte Eigenschaft, daß bei einer Einzielsituation in der nachfolgend näher erläuterten Ambiguityfunktion neben einem Hauptmaximum lediglich Nebenmaxima entstehen, die alle gleichen Wert besitzen nämlich

$$\frac{(\text{Wert des Hauptmaximums})}{\sqrt{N}} = \text{Wert eines Nebenmaximums.}$$

Wird ein derart codiertes Sendesignal an einem bewegten Ziel reflektiert, so entsteht, ein in FIG. 1 beispielhaft dargestelltes, in der Zeit t periodisches, hier binärphasencodiertes Empfangssignal. Dieses wird über mehrere Perioden M ausgewertet. Dabei wird das Empfangssignal für jedes Entfernungstor mit der jeweils konjugiert komplexen Sendesignalform, die auch als Matched-Korrelator bezeichnet wird, multipliziert und anschließend mit einer Fensterfunktion $G_i$ gewichtet (multipliziert). Diese ist vorteilhafterweise ein sogenanntes Blackman-Fenster, das drei Kosinus-Glieder enthält, sich minimal über drei Perioden ($M_{min} = 3$) erstreckt und mittensymmetrisch bezüglich dem Wert (MN-1)/2 liegt. Eine derartige Fenstertechnik ist wichtig, da die ansonsten entstehenden Nebenmaxima in Dopplerfrequenzrichtung in störender Weise zu groß würden. Bei Verwendung der Fenstertechnik darf aber die Periodenzahl M nicht so klein gewählt werden, z.B. M = 1, daß die Überlappung zweier benachbarter Dopplerfrequenzkeulen in der Ambiguityfunktion eine störende Vergrößerung der Nebenzipfel bewirkt.

Von dem nach der Gewichtung entstehenden Signal (unterstes Teilbild in FIG. 1) wird eine FFT (Fast Fourier Transformation) gebildet. Die FFT hat also die Länge $M \cdot N$ und hat deshalb einen entsprechenden Integrationsgewinn zur Folge. Die Eingangswerte der FFT haben den zeitlichen Abstand einer Subpulslänge zueinander; damit kann die Dopplerfrequenz innerhalb des Eindeutigkeitsbereiches in Einheiten der reziproken Subpulslänge gemessen werden.

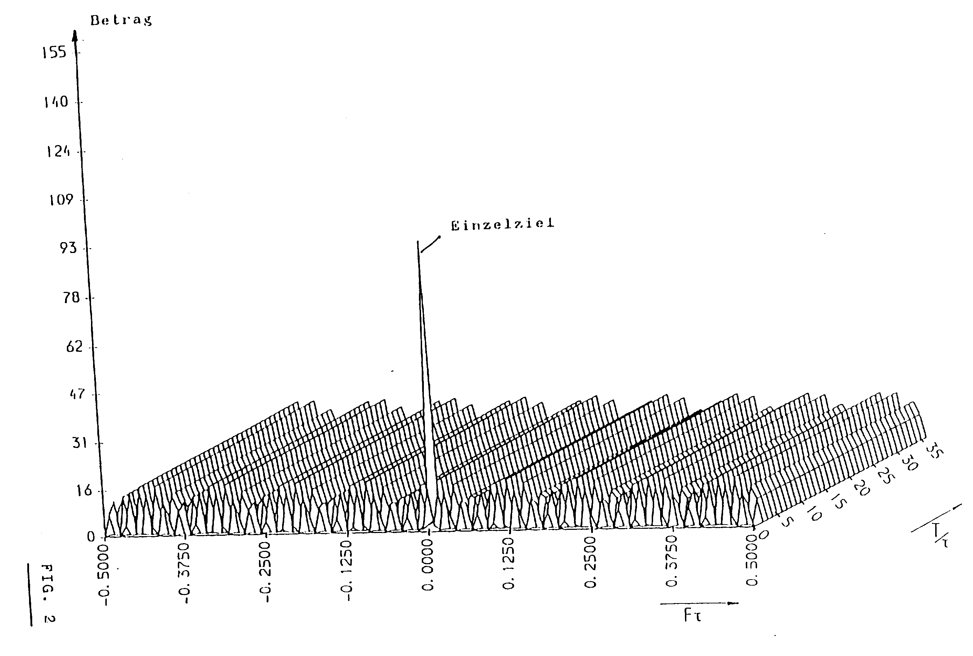

Von dem Ausgangssignal der FFT wird lediglich der Betrag ausgewertet. FIG. 2 zeigt eine beispielsweise Darstellung eines Einzelzieles an der Dopplerfreauenzstelle $F \cdot \tau = 0$ und der Entfernungsstelle $T/\tau = 1$. Dabei ist der Betrag der FFT in willkürlichen Einheiten aufgetragen.

Das beschriebene Verfahren ist darstellbar durch die Gleichung

$$\varphi(r,d) \;=\; \left| \sum_{n=0}^{MN-1} a_n \cdot s^*(n-r)\bmod(N) \cdot G_n \cdot e^{-j2\pi\frac{d\cdot n}{M\,N}} \right|$$

mit

r = 0...N-1; Entfernungstor; normiert auf Subpulsabstand
d = 0...MN-1; Dopplerfrequenztor nomiert auf $1/MN\tau$
M = Periodenzahl
N = Anzahl der Subpulse/Periode
$s^*_i$ = Matched-Korrelator des Codes $s_i$
$G_i$ = Fensterfunktion, M Perioden lang; mittensymmetrisch bez. (MN-1)/2
$a_i$ = Abtastwerte des Empfangssignals.

Die Funktion $\varphi(r,d)$ ist die bereits erwähnte Ambiguityfunktion.

Der mit den erwähnten Polyphasencodes $s_n$ erreichbare Nebenzipfelabstand ist für einige Primzahlenlängen, die sich in der Nähe einer Zahl zur Basis 2 befinden, beispielhaft angegeben:

| Länge N | Nebenzipfelabstand |
|---|---|
| 127 | 21 db |
| 257 | 24 db |
| 509 | 27 db |
| 1031 | 30 db |
| 2053 | 33 db |
| 4099 | 36 db |
| 8191 | 39 db |

(fortgesetzt)

| Länge N | Nebenzipfelabstand |
|---------|--------------------|
| 16381 | 42 db |
| 32771 | 45 db |
| 65537 | 48 db |

Bei der Radarsignalverarbeitung müssen demnach große Codelängen implementiert werden, um einen hohen Nebenzipfelabstand zu gewährleisten. Die Generierung langer Codes bereitet aufgrund des Bildungsgesetzes keine Schwierigkeiten. Der Realisierungsaufwand ist dabei allerdings beträchtlich.

Die Anzahl der betrachteten Perioden M muß möglichst klein gewählt werden, damit der vorhandene Zeitraum MNτ durch möglichst große N ausgeschöpft wird.

Der folgende Zusammenhang schätzt die maximal erreichbare Anzahl der Codeelemente ab:

$$N_{max} = \frac{T_B}{M_{min} \cdot \tau};$$

$T_B =$      Beobachtungszeit;
$\tau =$      Subpulsabstand;
$M_{min} =$      minimale Anzahl der zu verarbeitenden Codeperioden.

Die Beobachtungszeit ist dabei die Zeit, in der ein Ziel innerhalb einer z.B. rotierenden Antennenkeule ein weitgehend stationäres Reflexionsverhalten aufweist.

Das Signalverarbeitungsverfahren kommt nicht ohne Fenstertechnik aus, da sonst die Nebenmaxima in Dopplerfrequenzrichtung zu groß wären. Bei Verwendung einer Fenstertechnik aber darf die Periodenanzahl M nicht so klein gewählt werden (z.B. M = 1), daß die Überlappung zweier benachbarter Dopplerfrequenzkeulen in der Ambiguityfunktion eine Vergrößerung der Nebenzipfel bewirkt. Für die Verwendung eines Fensters mit 3 cos-Gliedern (Blackman) beträgt $M_{min} = 3$.

Im folgenden ist ein Beispiel der Signalverarbeitung angegeben:

| | |
|---|---|
| Bandbreite der Radaranlage : | B = 2 MHz |
| CW-Betrieb, → Subpulsabstand: | τ = 500 ns |
| Beobachtungszeit : | $T_B$ = 4 ms |
| Blackman-Fenstertechnik → | M = 3 |
| daraus folgt die Codelänge : | N ≃ 2700 |
| | z.B. N=2731 (Primzahl) |
| Nebenzipfelabstand : | 34 db |
| Entfernungsauflösung : | 75 m |
| Entfernungseindeutigkeitsbereich : | 200 km |
| Dopplerfrequenzauflösung : | 750 Hz |
| Dopplerfrequenzeindeutigkeitsbereich : | ± 1 MHz |
| Länge der FFT : | 8192 |
| Anzahl der FFT's : | 2731 für volle Entfernungsbetrachtung |
| | 800 für Entfernung 0...60 km |

Die Anzahl der FFT's ist gleich der Anzahl der betrachteten Entfernungstore.

Das in FIG. 2 dargestellte Beispiel ist leicht auswertbar, da der Betrag des Einzelzieles deutlich größer ist als derjenige der Nebenzipfel der Ambiguityfunktion. Der Betrag ist abhängig von der Intensität des an einem Ziel reflektierten Radarsignals.

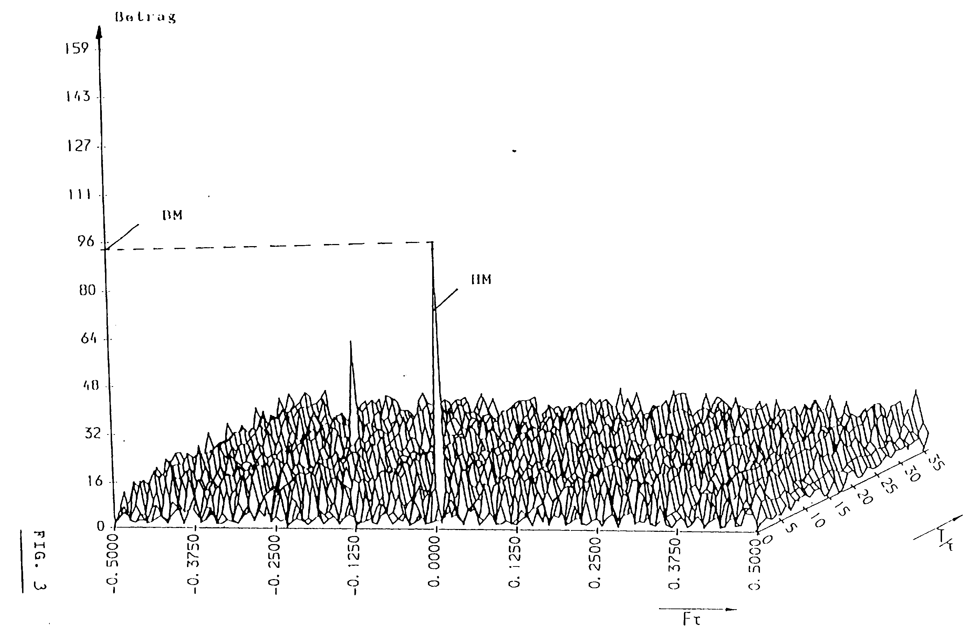

Die Darstellung der FIG. 3 entspricht derjenigen der FIG. 2. Es ist also wieder der Betrag (in willkürlichen Einheiten) der Ambiguityfunktion in Abhängigkeit von der normierten Dopplerfrequenz F·τ und der normierten Entfernung (Range) T/τ aufgetragen. FIG. 3 zeigt die Ambiguityfunktion für eine Mehrzielsituation, bei welcher den Zielen unterschiedliche Dopplerfrequenzen, Entfernungen und Beträge zugeordnet sind. In FIG. 3 sind sechs (!) Ziele dargestellt. Davon sind lediglich zwei leicht erkennbar. Die Auswertung einer solchen Darstellung erfolgt vorteilhafterweise nach folgendem Grundprinzip:

Zunächst wird in der gesamten Range-/Dopplerfrequenzebene das Betragsmaximum BM (FIG. 3) gesucht. Unter der Annahme, daß dieses Maximum das Hauptmaximum HM eines Zieles, und zwar des pegelstärksten Zieles in der Ebene ist, wird es in ein später darzustellendes Ausgabefeld eingetragen. Da jetzt die Position und der komplexe Zeiger eines detektierten Hauptmaximums vorliegen, können die komplexen Zeiger aller zugehörigen Nebenmaxima in der Range-/Dopplerfrequenzebene leicht bestimmt werden, da die Ambiguityfunktion des Codes bekannt ist. Die so ermittelte Referenzfunktion wird von der tatsächlichen Range-/Dopplerfrequenzfunktion, z.B. gemäß FIG. 3, subtrahiert, so daß weitere schwächere Hauptmaxima aus dem Nebenzipfelbereich freigelegt werden. In dem resultierenden Differenzbild wird wiederum das Betragsmaximum gesucht usw. Das Abbruchkriterium dieses iterativen Verfahrens wird durch eine untere Betragsschwelle bei der Maximumsuche festgelegt. Das Festlegen einer solchen unteren Betragsschwelle ist in der Radartechnik ein geläufiges Verfahren.

Diese Vorgehensweise wird durch eine analytische Betrachtung untermauert. Die lineare Verarbeitung des Empfangssignals $a_n$, die das komplexe Zeigerfeld der Range-/Dopplerfrequenzebene erstellt, ergibt sich aus der Gleichung

$$\psi(r,d) = \sum_{n=0}^{MN-1} a_n \cdot s^*(n-r) \bmod(N) \cdot G_n \cdot e^{-j2\pi\frac{y \cdot n}{M \, N}}$$

Diese Verarbeitung liefert N Entfernungstore und MN Dopplerfrequenztore, also die komplexen Eintragswerte für insgesamt $M \cdot N^2$ Zellen (Radarauflösungszellen).

Das Detektionsverfahren sucht aus dem Feld denjenigen Wert mit dem höchsten Betrag heraus und notiert seine Position ($r_{max}$, $d_{max}$). Der Betrag des gefundenen (Haupt-)Maximums wird in die Zelle ($r_{max}$, $d_{max}$) eines später darzustellenden Ausgabefeldes eingetragen. Außerdem wird zu dem Maximum ein Referenzfeld ermittelt, das die zugehörigen störenden Nebenmaxima betrags- und phasenrichtig beinhaltet. Das Referenzfeld wird folgendermaßen gebildet:

$$\xi(r,d) = \psi(r_{max}, d_{max}) \cdot e^{-j2\pi\frac{(d-d_{max}) \cdot r_{max}}{MN}} \cdot \chi(r-r_{max}, d-d_{max})$$

$$\text{wobei } \chi(x,y) = \sum_{n=0}^{MN-1} s_n \cdot s^*(n-x) \bmod(N) \cdot G_n \cdot e^{-j2\pi\frac{y \cdot n}{M \, N}}$$

Das Referenzfeld besteht demnach aus der Ambiguityfunktion $\chi(x,y)$ des Codes, die in die richtige, durch das gefundene Maximum bestimmte Range-/Dopplerfrequenzposition geschoben wird, gewichtet mit dem gefundenen Maximumvektor und mit einem entfernungs- und dopplerabhängigen Korrekturfaktor.

Anschließend wird das Referenzfeld von dem Range-/Dopplerfeld subtrahiert:

$$\psi^1(r,d) = \psi(r,d) - \xi(r,d)$$

Aus dem Differenzfeld $\psi^1(r,d)$ wird nun wiederum das Betragsmaximum gesucht, usw.

Der Eintrag eines gefundenen Maximums in das Ausgabefeld wird immer nur dann vorgenommen, wenn nicht die jeweilige Zelle durch einen vorherigen Eintrag schon besetzt ist. Nach Abbruch des Verfahrens wird das Ausgabefeld dargestellt.

Wird in der linearen Verarbeitung ein Fenster mit p cos-Gliedern verwendet, muß die Anzahl der zu verarbeitenden Signalperioden mindestens M = 2p betragen, damit das Detektionsverfahren einwandfrei arbeitet. Bei Verwendung eines Blackman-Fensters beträgt demnach $M_{min}= 6$.

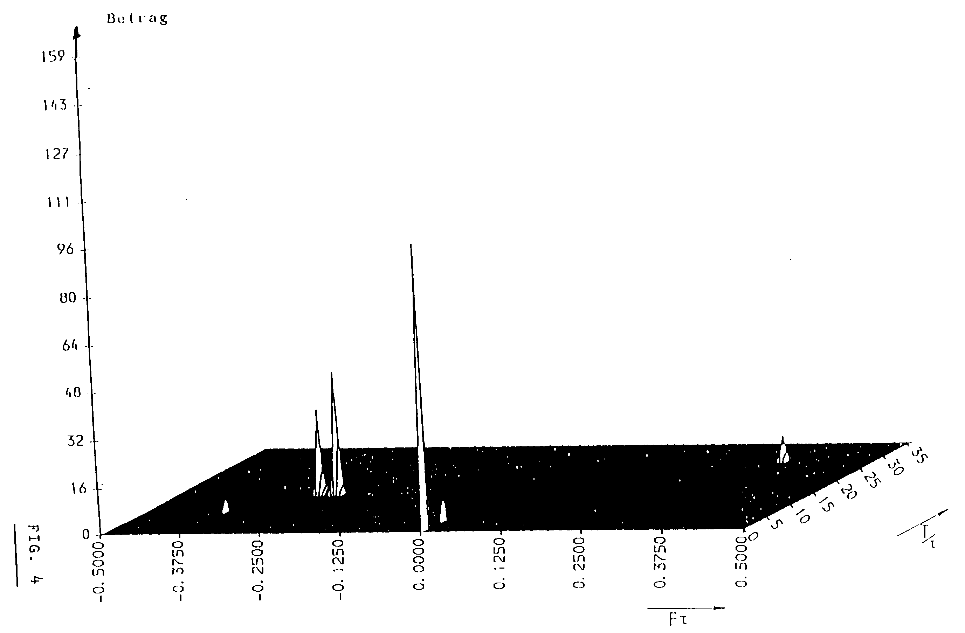

Das nach diesem Verfahren ermittelte Ergebnis ist in FIG. 4 dargestellt. Es sind deutlich die erwähnten sechs Ziele erkennbar. Die schwarz dargestellte Ebene stellt den erwähnten Schwellwert dar. Die Entdeckungsdynamik in dem Beispiel entsprechend FIG. 4 beträgt ungefähr 45 dB, der ursprüngliche Nebenzipfelabstand der zugehörigen Ambiguityfunktion dagegen nur 15 dB, da lediglich ein Code mit der Codelänge 37 verwendet wurde.

5

Die Erfindung ist vorteilhafterweise bei verschiedenen Radarverfahren anwendbar, z.B. CW-Radar, HPRF- oder MPRF-Radar.

**Patentansprüche**

1. Verfahren zur Signalverarbeitung für eine Radaranlage, bei der codierte Signale ausgesandt, dann empfangen und anschließend ausgewertet werden, <u>dadurch gekennzeichnet</u>, daß das ausgesandte Signal einen an die maximale Reichweite ($R_{max}$) und den maximalen Dopplerfrequenzeindeutigkeitsbereich ($f_{Dmax}$) der Radaranlage angepaßten zeitlich periodisch wiederholten Polyphasencode enthält, der gemäß der Formel

$$s_n = \exp(j \frac{\pi}{3 \cdot N} (n^3 - N^2 n))$$

gebildet wird, wobei

$s_n =$ Ursprungssignal
$n =$ 0 ... N - 1
$N =$ Anzahl der in dem Polyphasencode enthaltenen Subpulse mit $N \geq 3$; N = Primzahl

bedeuten und wobei die Formeln

$$R_{max} = N \cdot \tau \cdot c/2$$

und

$$f_{Dmax} = 1/\tau$$

gelten, wobei

$\tau =$ Subpulslänge und
$c =$ Lichtgeschwindigkeit

bedeuten.

2. Verfahren nach Anspruch 1, dadurch gekennzeichnet, daß mit dem empfangenen Signal (Empfangssignal), das aus dem ausgesandten Signal (Sendesignal) durch Reflexion an einem Ziel entsteht, eine Ambiguityfunktion ($\varphi$) gebildet wird gemäß der Formel

$$\varphi(r,d) = \left| \sum_{n=0}^{MN-1} a_n \cdot s*_{(n-r)\bmod(N)} \cdot G_n \cdot e^{-j2\pi \frac{d \cdot n}{M\ N}} \right|$$

mit

$r =$ 0...N-1; Entfernungstor, normiert auf Subpulsabstand
$d =$ 0...MN-1; Dopplerfrequenztor; normiert auf $1/MN_r$
$M =$ Periodenanzahl
$N =$ Anzahl der Subpulse
$s*_i =$ Matched-Korrelator des Codes $s_i$
$a_i =$ Abtastwerte des Empfangssignals
$G_i =$ Fensterfunktion; M Perioden lang; mittensymmetrisch bez. (MN-1)/2

und

daß zumindest das Hauptmaximum der Ambiguityfunktion als Ziel gewertet wird.

3. Verfahren nach Anspruch 1 oder Anspruch 3, dadurch gekennzeichnet, daß die maximale Anzahl der Subpulse/ Periode ($N_{max}$) bestimmt wird durch die Formel

$$N_{max} = \frac{T_B}{M_{min} \cdot \tau}$$

mit

$T_B =$ Beobachtungszeit
$\tau =$ Subpulsabstand
$M_{min} =$ minimale Anzahl der zu verarbeitenden Codeperioden.

4. Verfahren nach einem der vorhergehenden Ansprüche, dadurch gekennzeichnet, daß als Fensterfunktion ($G_i$) ein Blackman-Fenster, das drei Kosinus-Glieder enthält, gewählt wird und daß die minimale Anzahl ($M_{min}$) der zu verarbeitenden Codeperioden ohne Verwendung des anschließend beschriebenen Detektionsverfahrens drei beträgt und mit Verwendung des Detektionsverfahrens sechs beträgt.

5. Verfahren nach einem der vorhergehenden Ansprüche, dadurch gekennzeichnet, daß die Ambiguityfunktion ($\varphi$) nach einem iterativen Detektionsverfahren ausgewertet wird, bei dem

- zunächst in der gesamten Entfernungs-/Dopplerfrequenzebene das Hauptmaximum des Betrages der Ambiguityfunktion ermittelt wird,
- das Hauptmaximum einem Ziel zugeordnet und in ein Ausgabe- und/oder Anzeigefeld eingetragen wird,
- zu dem Hauptmaximum dessen Position, dessen komplexer Zeiger und die komplexen Zeiger aller zu dem Hauptmaximum gehörenden Nebenmaxima in der Entfernungs-/Dopplerfrequenzebene gebildet werden,
- die so gebildete Ambiguity-Referenzfunktion von der erstmals gebildeten Ambiguityfunktion subtrahiert wird,
- in dem resultierenden Differenzbild wiederum ein Hauptmaximum ermittelt wird und so fort und
- das Abbruchkriterium dieses iterativen Verfahrens durch eine vorgebbare untere Betragsschwelle bei der Maximumsuche festgelegt wird.

## Claims

1. Method for the signal processing for a radar installation,in which coded signals are sent out, then received and subsequently evaluated, characterised thereby, that the emitted signal contains a polyphase code which is repeated periodically in time, is adapted to the maximum range ($R_{max}$) and the maximum Doppler unambiguity range ($f_{Dmax}$) of the radar installation and is formed according to the formula

$$s_n = \exp(j \frac{\pi}{3 \cdot N} (n^3 - N^2 n))$$

wherein

$S_n =$ original signal
$n =$ $0 \ldots N - 1$
$N =$ number of the subpulse contained in the polyphase code wherein N is a prime number equal to at least 3

and wherein the formulae

$$R_{max} = N . \tau . c/2$$

and

$$f_{Dmax} = 1/\tau$$

apply and wherein

$\tau =$ subpulse length and
$c =$ speed of light.

**2.** Method according to claim 1, characterised thereby, that an ambiguity function ($\varphi$) is formed according to the formula

$$\varphi(r,d) = \left| \sum_{n=0}^{MN-1} a_n \cdot s^*(n-r) \bmod(N) \cdot G_n \cdot e^{-j2\pi\frac{d \cdot n}{M \; N}} \right|$$

from the received signal (reception signal), which is formed out of the emitted signal (transmission signal) by reflection at a target, wherein

$r =$ 0 ... N-1; distance gate normalised to the subpulse spacing,
$d =$ 0 ... MN-1; Doppler frequency gate normalised to $1/MN_r$,
$M =$ number of periods,
$N =$ number of the subpulses,
$s^*_i =$ matched correlator of the code $s_i$,
$a_i =$ scanning values of the reception signal and
$G_i =$ window function of a length of M periods and centrosymmetrically with respect to (MN-1)/2

and that at least the main maximum of the ambiguity function is evaluated as target.

**3.** Method according to claim 1 or claim 2, characterised thereby, that the maximum number of the subpulses per period ($N_{max}$) is determined by the formula

$$N_{max} = \frac{T_B}{M_{min} \cdot \tau}$$

wherein

$T_b =$ observation time,
$\tau =$ subpulse spacing and
$M_{min} =$ minimum number of the code periods to be processed.

**4.** Method according to one of the preceding claims, characterised thereby, that a Blackman window, which contains three cosine members, is chosen as window function ($G_i$) and that the minimum number ($M_{min}$) of the code periods to be processed amounts to three without use of the subsequently described detection process and to six with use of the detection process.

**5.** Method according to one of the preceding claims, characterised thereby, that the ambiguity function ($\varphi$) is evaluated according to an iterative detection process, in which

- the main maximum of the magnitude of the ambiguity function is initially ascertained in the entire distance and Doppler frequency plane,
- the main maximum is associated with a target and entered into an output field and/or display field,
- for the main maximum of the position thereof, its complex vector and the complex vectors of all secondary maxima belonging to the main maximum are formed in the distance and Doppler frequency plane,
- the ambiguity reference function thus formed is subtracted from the ambiguity function formed the first time,
- a main maximum is again ascertained in the resultant difference image and so forth and

- the terminating criterion of this iterative process is determined by a presettable lower magnitude threshold in the search for the maximum.

**Revendications**

1. Procédé de traitement de signaux pour un système radar, selon lequel des signaux codés sont émis puis reçus et ensuite exploités, <u>caractérisé en ce</u> que le signal émis contient un code polyphasé, répété périodiquement dans le temps, qui est adapté à la portée maximale ($R_{max}$) et à la plage d'univocité de fréquence Doppler maximale ($f_{Dmax}$) du système radar, code polyphasé qui est formé selon la formule

$$s_n = \exp(j\, \frac{\pi}{3 \cdot N}\, (n^3 - N^2 n))$$

où

$s_n =$ signal original
$n =$ 0 ... N -1
$N =$ nombre de sous-impulsions contenues dans le code polyphasé pour $N \geq 3$; N = nombre premier

et où

$$R_{max} = N \cdot \tau \cdot c/2$$

et

$$f_{Dmax} = 1/\tau$$

$\tau$ étant égale à la longueur de sous-impulsions et
c étant la vitesse de la lumière.

2. Procédé selon la revendication 1, caractérisé en ce que le signal reçu (signal de réception), créé à partir du signal émis (signal d'émission) par réflexion sur une cible, est utilisé pour établir une fonction d'ambiguïté ($\varphi$) selon la formule

$$\varphi(r,d) = \left|\ \sum_{n=0}^{MN-1} a_n \cdot s^*(n-r) \bmod(N) \cdot G_n \cdot e^{-j2\pi \frac{d \cdot n}{M\,N}}\ \right|$$

où

$r =$ 0...N-1; porte de distance, normalisée sur l'espacement de sous-impulsion
$d =$ 0...MN-1; porte de fréquence Doppler; normalisée sur $1/MN_r$
$M =$ nombre de périodes
$N =$ nombre de sous-impulsions
$s^*_i =$ corrélateur adapté du code $s_i$
$a_i =$ valeurs d'échantillonnage du signal de réception
$G_i =$ fonction de fenêtre; longueur M périodes; centrée symétriquement par rapport à (MN-1)/2,

et qu'au moins le maximum principal de la fonction d'ambiguïté est considéré comme cible.

3. Procédé selon la revendication 1 ou 2, caractérisé en ce que le nombre maximal de sous-impulsions par période ($N_{max}$) est déterminé par la formule

$$N_{max} = \frac{T_B}{M_{min} \cdot \tau}$$

où

$T_B$ =      temps d'observation
$\tau$ =      espacement de sous-impulsion
$M_{min}$ =      nombre minimal de périodes de code à traiter.

4.   Procédé selon une des revendications précédentes, caractérisé en ce qu'une fenêtre de Blackman, contenant trois termes cosinus, est choisie comme fonction de fenêtre ($G_i$) et que le nombre minimal ($M_{min}$) de périodes de code à traiter est de trois sans utilisation du procédé de détection décrit ensuite, et de six avec utilisation de ce procédé de détection.

5.   Procédé selon une des revendications précédentes, caractérisé en ce que la fonction d'ambiguïté ($\varphi$) est exploitée selon un procédé de détection itératif d'après lequel

- le maximum principal de la grandeur de la fonction d'ambiguïté est déterminé tout d'abord dans tout le plan de distance/fréquence Doppler,
- le maximum principal est coordonné à une cible et introduit dans un champ de délivrance et/ou un champ d'affichage,
- la position et le curseur complexe du maximum principal, de même que les curseurs complexes de tous les maxima secondaires coordonnés au maximum principal, sont formés dans le plan de distance/fréquence Doppler,
- la fonction de référence d'ambiguïté, ainsi établie, est déduite de la fonction d'ambiguïté établie en premier,
- un maximum principal est déterminé de nouveau dans l'image différentielle ainsi obtenue, et ainsi de suite, et
- le critère d'interruption de ce procédé itératif est fixé par un seuil inférieur de grandeur, pouvant être déterminé au préalable, pour la recherche du maximum.

FIG. 1

FIG. 2

FIG. 3

FIG. 4